# DEMANDE DE BREVET EUROPEEN

(11) **EP 0 987 612 A1**
(43) Date de publication de la demande: **22.03.2000**
(21) Numéro de dépôt: 99402247.3
(22) Date de dépôt: 13.09.1999
(51) Int. Cl.: G05B 19/042, G05B 9/03

(54) **Agencement pour la commande individuelle d'un actionneur d'une installation industrielle à haute sécurité**

(30) Priorité: 18.09.1998 FR 9811678
(71) Demandeur: Alstom Centrales Energetiques SA, 75 116 Paris (FR)
(72) Inventeur: Cousin, Claude, 91120 Palaiseau (FR)
(74) Mandataire: Gosse, Michel

(57) **Abrégé**

Agencement pour la commande individuelle d'un actionneur (1) dans une installation industrielle à haute sécurité dont les actionneurs sont commandés par l'intermédiaire d'unités de commande individuelles, programmées (2), incluses dans un système de commande général qui permet à un exploitant de conduire l'installation, soit à partir d'une salle de commande principale (12), soit à partir d'une salle de commande de secours (14) en cas de besoin, ces deux salles étant équipées d'organes de commande (13) manuellement manoeuvrables qui permettent d'agir individuellement sur les unités de commande des actionneurs. Chaque organe de commande est individuellement relié par deux liaisons numériques de type série (1L1, 1L2) de sens inverse à l'unité de commande de l'actionneur sur lequel il agit.

## Description

L'invention concerne un agencement pour la commande individuelle d'un actionneur d'installation industrielle à haute sécurité et notamment d'une installation nucléaire produisant de l'énergie électrique.

Il est connu que les actionneurs prévus dans de telles installations sont multipliés pour des raisons de sûreté, lorsqu'ils ont un rôle important, ils sont par exemple groupés en entre deux et quatre trains de sécurité indépendants. En cas de besoin, chacun des actionneurs de ces trains de sécurité doit toujours pouvoir être indépendamment commandé, d'une manière individuelle et prioritaire, par un agencement individuel de commande. Chaque actionneur est placé sous le contrôle d'une unité de commande individuelle sur laquelle vient directement agir un agencement individuel qui est à commande manuelle pour des raisons de sécurité. Les unités de commande individuelles des actionneurs font partie d'un système de commande général où elles sont reliées à diverses autres unités programmées d'exploitation et de supervision par l'intermédiaire d'une architecture de communication. En marche normale de l'installation, la commande d'un actionneur est assurée par le système de commande général et il est classiquement prévu des interverrouillages entre les unités de commande d'actionneur d'une même installation.

Le système de commande général permet à un exploitant de conduire l'installation à partir d'une salle de commande principale comportant divers moyens de supervision et de conduite et il est classiquement prévu une salle de commande de secours séparée et indépendante de la première dont elle est la réplique, pour des raisons de sécurité. Les moyens de supervision et de conduite d'une salle comprennent notamment les organes à commande manuelle qui permettent aux agencements individuels de commande d'agir directement sur les unités de commande individuelles des actionneurs. Ces organes sont par exemple du type boite à boutons ou du type couramment désigné par le sigle TPL pour Tourner-Pousser-Lumineux, ils permettent d'agir directement et usuellement par voie électrique sur l'unité de commande propre à cet actionneur. Ceux de ces organes de commande qui sont installés au niveau d'une salle de commande principale, sont actuellement reliés par des liaisons individuelles point-à-point aux unités de commande des actionneurs sur lesquelles ils agissent.. Ils sont dupliqués au niveau de la salle de commande de secours et leurs correspondants sont également reliés par des liaisons individuelles point-à-point, chacun à la même unité de commande d'actionneur que l'organe qu'il duplique.

Une telle organisation de commande a pour inconvénient d'exiger la présence d'un câblage multifilaire relativement important entre organes et unités de commande et ce câblage présente des risques en matière de fiabilité dans la mesure où chaque organe de commande comporte généralement un nombre relativement élevé de bornes pour le raccordement des différents fils qui le relient à une unité de commande et où chaque unité de commande comporte un nombre de bornes de raccordement qui est double pour sa mise en liaison avec les deux organes de commande pouvant permettre à un exploitant d'agir directement sur elle.

De plus, comme il est connu, une commande progressive de certains actionneurs peut devoir être réalisée. Une telle commande est par exemple réalisée par enfoncement plus ou moins prolongé d'un bouton d'organe qui se traduit par un signal électrique présent pendant le temps d'enfoncement. Elle implique la présence de moyens de génération de signal au niveau des organes de commande concernés et de moyens d'interprétation et de traduction du signal au niveau des unités de commande recevant un tel signal.

Il est primordial que la transmission des commandes envoyées par les organes à commande manuelle aux unités de commande des actionneurs soit assurée de manière fiable et avec un maximum de sécurité.

A cet effet, l'invention propose un agencement pour la commande individuelle d'un actionneur d'une installation industrielle à haute sécurité dont les actionneurs sont commandés par l'intermédiaire d'unités de commande programmées individuelles incluses dans un système de commande général permettant à un exploitant de conduire l'installation, soit à partir d'une salle de commande principale, soit à partir d'une salle de commande de secours en cas de besoin, ces deux salles étant équipées d'organes de commande manuellement manoeuvrables qui permettent d'agir directement sur les unités de commande des actionneurs.

Selon une caractéristique de l'invention, chaque organe de commande manuellement manoeuvrable est individuellement relié à l'unité de commande de l'actionneur sur lequel il agit par l'intermédiaire de deux liaisons numériques de type série de sens inverse.

Selon l'invention, chaque unité de commande d'actionneur est reliée à chacun des deux organes de commande, respectivement disposés dans les deux salles de commande de l'installation, par une liaison unidirectionnelle, série, individuelle pour recevoir les informations de commande numérisées en provenance de ces organes et par une autre liaison unidirectionnelle, série, individuelle pour transmettre des informations numérisées vers chacun de ces organes.

Selon l'invention, l'unité de commande d'un actionneur comporte au moins un processeur et une mémoire à double accès à laquelle sont séparément reliés le processeur et une interface de transmission donnant accès au niveau supérieur du système de commande pour permettre à cette unité de commande de fonctionner indépendamment du système de commande, en cas de nécessité.

L'invention, ses caractéristiques et ses avantages sont précisés dans la description qui suit en liaison avec les figures évoquées ci-dessous.

La figure 1 présente un schéma de principe d'un système de commande pour installation industrielle de haute sécurité comportant des agencements individuels de commande d'actionneur selon l'invention.

La figure 2 présente un schéma d'un organe à commande manuelle pour agencement individuel de commande d'actionneur selon l'invention.

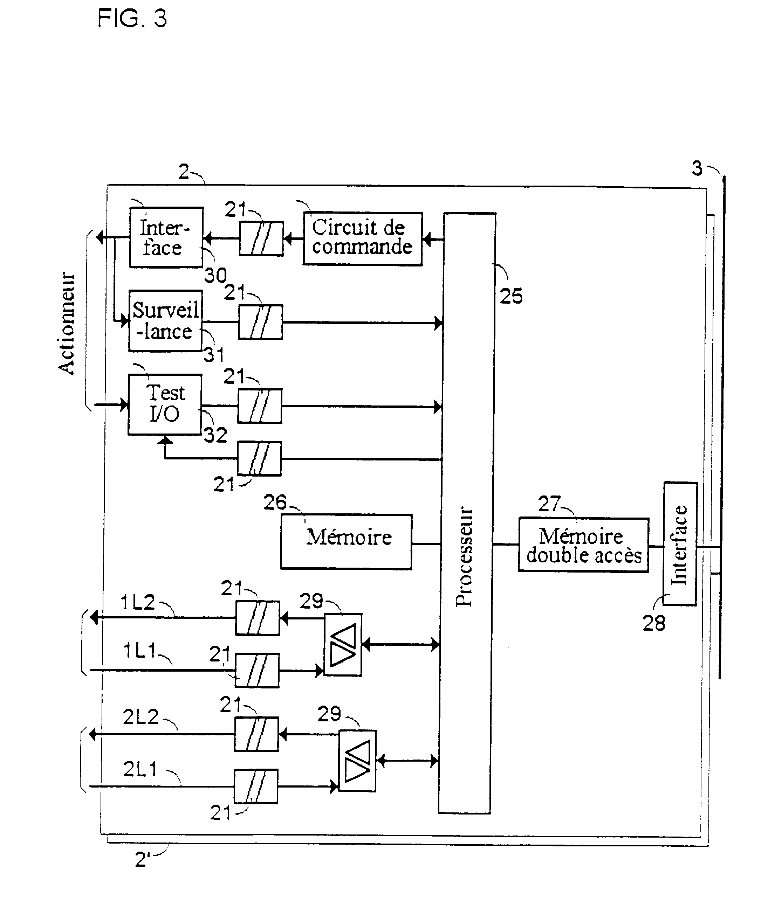

La figure 3 présente un schéma d'un exemple d'unité de commande d'actionneur agencée pour coopérer avec un agencement de commande d'actionneur selon l'invention.

Les agencements de commande individuels selon l'invention sont destinés à équiper une installation industrielle à haute sécurité, telle qu'une installation nucléaire de production d'énergie électrique qui comporte une pluralité d'actionneurs, tels les actionneurs 1 et 1', qui sont individuellement commandés par l'intermédiaire d'unités individuelles de commande, telles les unités 2 et 2'.

Ces unités individuelles de commande sont classiquement des unités programmées telles que prévues pour les domaines de haute sécurité, il n'y est notamment pas admis de processus d'interruption logicielle. Les programmes mis en oeuvre sont réalisés sous forme modulaire la plus petite possible pour des raisons de sécurité et pour tenir compte du fait qu'il n'y est pas prévu d'interruption. Le stockage des données de programme y est réalisé en dur de manière à éliminer les risques d'effacement de données essentielles.

Les unités de commande d'actionneur font partie d'un système de commande général où elles sont reliées à une ou plus généralement plusieurs unités programmées d'exploitation et/ou de supervision, ces unités étant reliées entre elles par une architecture de communication. Elles forment un système de conduite de procédé par lequel le fonctionnement de l'installation est piloté sous la supervision du personnel d'exploitation affecté à cette installation. L'architecture de communication comporte au moins un ou plusieurs réseaux, ceux-ci sont interconnectés et ils desservent alors des unités répartis sur différents niveaux dans le système de commande général.

Les unités d'exploitation et de supervision comportent au moins un processeur, un ensemble de mémoires vives et/ou mortes et des équipements auxiliaires divers, notamment des coupleurs d'entrée/sortie.

Dans une première variante connue prévue pour des installations relativement modestes, les unités de commande 2 des actionneurs sont connectées à un réseau local, par exemple un réseau de terrain 3, de type bus électrique ou optique, qui leur permet de communiquer avec le niveau supérieur du système de conduite. Ces communications peuvent éventuellement s'établir directement avec une unité programmée du niveau supérieur, telle 4, qui est alors raccordée au réseau 3. Dans une seconde variante connue prévue pour des installations plus développées, les communications des unités de commande 2 avec les unités programmées de niveau supérieur sont susceptibles de se réaliser par l'intermédiaire d'une unité spécialisée 5, classiquement de type automate, faisant fonction de concentrateur d'entrée/sortie et de routeur, pour les échanges d'information entre les unités de commande 2 et les unités de niveau supérieur autres qu'elle-même. Cette unité 5 est ici supposée reliée à un réseau local 6 de desserte d'unités de niveau intermédiaire, ici symbolisées par deux unités programmées 7 et 8. L'unité 7 est par exemple un contrôleur d'électronique de puissance, l'unité 8 est ici supposé être un contrôleur d'automatisme supervisant les unités de commande 2, 2' dans la seconde variante où il n'y a pas d'unité 4. Comme il est connu, d'autres unités programmées peuvent être positionnées à ce niveau intermédiaire du système de conduite pour superviser d'autres groupes d'unités de niveau inférieur qui sont par exemple regroupées par grappes, chacune autour d'un réseau qui est par exemple du type bus. Elles ne sont pas évoquées plus avant ici dans la mesure où elles n'ont qu'un rapport direct avec l'objet de l'invention.

Dans l'exemple ici considéré qui correspond à un système de conduite de procédé supposé organisé à partir d'un système modulaire de contrôle-commande tel que le système de type ALSPA 8000 de la demanderesse, il est prévu un niveau fonctionnel supérieur ici représenté par deux unités 9 et 10. Ces unités sont reliées entre elles et aux unités du niveau intermédiaire d'automatisation du procédé par un réseau local 11 qui est par exemple un réseau Ethernet ou un réseau fonctionnellement équivalent, tel que le réseau S8000 de la demanderesse. L'unité 9 correspond par exemple à une plate-forme opérateur de conduite et de supervision de procédé ou plus simplement une station principale d'opérateur de supervision, elle est ici supposée située au niveau d'une salle de commande principale 12 de l'installation.

L'unité 10 correspond par exemple à un calculateur de procédé du système de conduite.

Comme indiqué dans le préambule, chaque unité de commande individuelle 2, 2' affectée à un actionneur peut être commandée de manière directe et prioritaire au moyen d'un agencement individuel de commande d'actionneur à partir de l'une ou l'autre des salles de commande d'une installation.

Il est prévu des organes de commande manuellement manoeuvrables, tels les organes 13 et 13', dans les agencements individuels de commande des actionneurs destinés à être fonctionnellement substitués aux organes classiques de type boîte à boutons ou organes de type TPL, pour permettre au personnel d'exploitation de commander les unités de commande 2 des actionneurs 1 depuis la salle de commande principale 12 de l'installation ou depuis une salle de commande de secours 14.

Tous les organes de commande sont ici prévus pour pouvoir émettre et recevoir les informations sous forme numérique, par exemple sous la forme d'un ou éventuellement de plusieurs octets. Chaque organe de commande est individuellement relié à une unité de commande par deux liaisons série de sens inverse, telles 1L1, 1L2 pour l'organe de commande 13 de la salle 12 et 1L1', 1L2' pour l'organe de commande 13' de cette même salle. Chaque unité de commande est reliée à un organe de commande de chacune des deux salles de commande 12 et 14 et par conséquent à deux liaisons unidirectionnelles de type série pour la réception des informations de commande numérisées en provenance des deux organes de commande reliées à elle et à deux liaisons unidirectionnelles de type série pour l'envoi d'informations numérisées en vers ces organes.

Chaque liaison unidirectionnelle est reliée à un codeur/décodeur 19, par exemple un multiplexeur/démultiplexeur, au niveau de l'organe de commande qu'elle dessert. Un dispositif de séparation électrique 21, classiquement de type opto-coupleur, est intercalé entre le codeur/décodeur et chacune des deux liaisons unidirectionnelles reliées à lui, lorsque les liaisons transmettent des signaux sous forme électrique.

La manipulation des dispositifs de sélection manuelle que comporte un organe de commande se traduit par la production de combinaisons binaires caractéristiques qui sont reconnaissables par les unités de commande et plus particulièrement par l'une de ces unités qui les reçoit. Dans l'exemple présenté, les dispositifs de sélection manuelle 22 sont symbolisés par des contacts électriques de type toutou-rien qui sont reliés au codeur du codeur/décodeur 19 de manière à commander chacun la génération d'une combinaison binaire différente lorsqu'ils sont actionnés.

Un dispositif de commande de consigne 23 est également relié au codeur du codeur/décodeur 19 de manière à permettre la commande d'un actionneur réglant auquel est envoyé une des combinaisons, représentatives des différentes valeurs de réglage qui sont prévues. Un réglage en fonction de la durée d'appui d'une touche est par exemple mis en oeuvre dans ce dispositif de commande de consigne.

Une pluralité de voyants 24 individuellement éclairés réagit aux commandes d'allumage qui sont transmises au décodeur du codeur/décodeur 19 par l'unité de commande 2 à laquelle est associé l'organe 13 considéré.

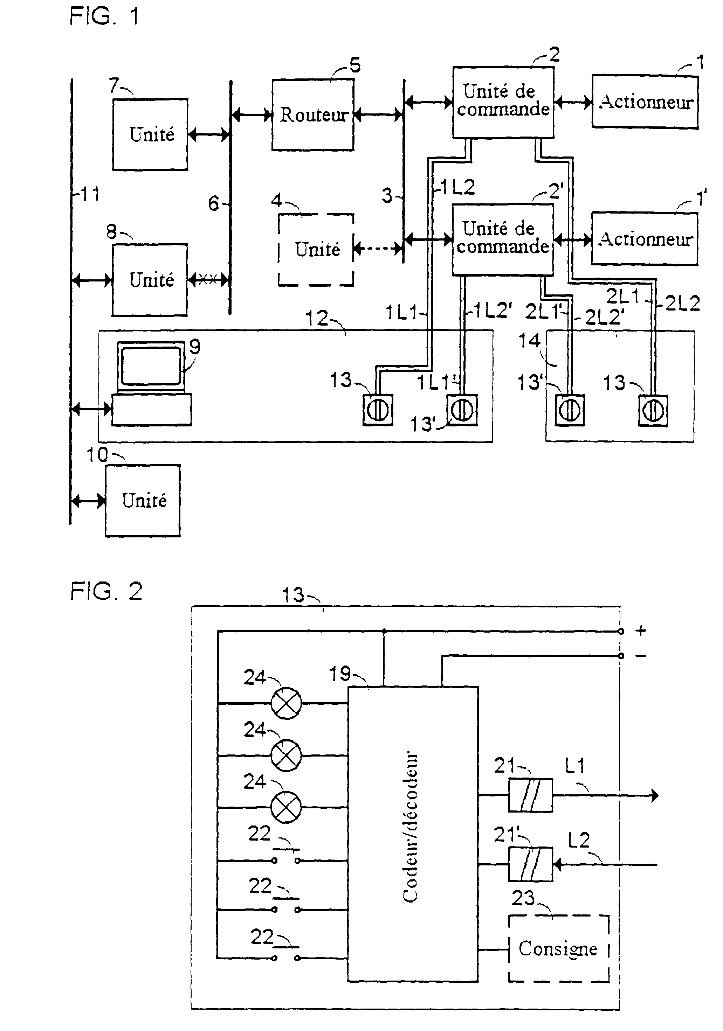

Un exemple d'unité de commande 2 d'actionneur 1 est schématisé sur la figure 1, il comporte un processeur 25 auquel est associé un ensemble de mémoires comprenant classiquement au moins une mémoire morte et une mémoire vive, cet ensemble étant ici symbolisé par une mémoire morte 26 à laquelle est associée une mémoire 27 à double accès. Cette mémoire 27 est utilisée pour les échanges d'informations numérisées entre le processeur 25 et le réseau 3, de type bus, par l'intermédiaire duquel les unités de commande telles que 2 et 2' communiquent avec les unités de niveau supérieur du système de commande. Elle est reliée au bus 3 par l'intermédiaire d'une interface de transmission 28. La mémoire 27 est agencée matériellement et logiciellement pour permettre que l'actionneur 1, commandé par le processeur 25 auquel elle est associée, puisse être commandé indépendamment du reste du système de commande de l'installation, en cas de nécessité et en particulier en cas de défaillance concernant la partie de système de commande qui est située de l'autre côté de l'interface 28 par rapport au processeur 25.

Le processeur 25 agit de manière connue en soi sur un des actionneurs 1 par l'intermédiaire d'un circuit de commande et au travers d'un dispositif de séparation électrique 21 et d'une interface 30. Les signaux apparaissant en sortie de l'interface 30 à destination de l'actionneur 1 sont parallèlement retransmis à un dispositif de surveillance 31 chargé de les vérifier et d'informer le processeur 25 sur les résultats de sa vérification. Cette information se traduit sous la forme de signaux numériques qui sont transmis au processeur au travers d'un dispositif de séparation électrique 21.

Un circuit de test 32 reçoit les signaux que transmet l'actionneur 1 à destination du processeur 25 pour l'avertir de la manière dont il fonctionne; selon un protocole connu de l'homme de métier. Des informations élaborées à partir des signaux reçus sont fournies par le circuit de test 32 au processeur 25 sous la supervision de ce dernier. Des dispositifs de séparation électrique 21 sont là encore placés d'une part sur la liaison par laquelle le processeur agit sur le circuit de test et d'autre part sur la liaison par laquelle le circuit de test informe le processeur.

Le processeur 25 d'une unité de commande est aussi en communication avec les deux organes de commande manuellement manoeuvrables d'un même actionneur. Cette mise en communication est assurée par les liaisons série qui unissent le processeur à chacun des organes, telles les liaisons de sens inverse lL1, 1L2 avec l'organe 13 de la salle de commande principale 12 pour le processeur de l'unité de commande 2 et telles les liaisons de sens inverse 2L1, 2L2 avec l'organe de commande 13 de la salle de commande de secours 14.

Chaque liaison bidirectionnelle vers un organe de commande s'effectue au travers de deux dispositifs individuels de séparation électrique 21 et via un circuit deux fils-quatre fils 29, inséré entre ces dispositifs et un port du processeur 25 qui est différent pour les deux organes de commande qui communiquent avec ce processeur, telle est par exemple la liaison bidirectionnelle composée des liaisons unidirectionnelles 2L1, 2L2 vers l'organe de commande 13 de la salle 14. Chaque liaison unidirectionnelle est par exemple alimentée en boucle pour permettre un auto-test et une transmission des informations numériques par ouverture de boucle.

## Revendications

1. Agencement pour la commande individuelle d'un actionneur (1) dans une installation industrielle à haute sécurité dont les actionneurs sont commandés par l'intermédiaire d'unités de commande individuelles (2) faisant partie d'un système de commande général où elles sont reliées à d'autres unités programmées d'exploitation de l'installation, ce système permettant à un exploitant de conduire l'installation, soit à partir d'une salle de commande principale (12), soit en cas de besoin à partir d'une salle de commande de secours (14) qui sont équipées l'une et l'autre d'organes à commande manuelle (13) qui permettent d'agir directement chacun sur l'unité de commande d'un actionneur, caractérisé en ce qu'il comporte un organe à commande manuelle qui est individuellement relié à l'unité de commande de l'actionneur sur lequel il agit par l'intermédiaire de deux liaisons numériques de type série (1L1, 1L2) de sens inverse.

2. Agencement, selon la revendication 1, dans lequel l'unité de commande (2) d'un actionneur (1) est reliée à chacun des deux organes de commande (13), respectivement disposés dans les deux salles de commande (12, 14) de l'installation, par une liaison unidirectionnelle, série, individuelle (1L1, 2L1) pour recevoir les informations de commande numérisées en provenance de ces organes et par une autre liaison unidirectionnelle, série, individuelle (1L2, 2L2) pour transmettre des informations numérisées vers chaque organe.

3. Agencement, selon l'une des revendications 1, 2, dans lequel chaque liaison série est alimentée en boucle pour permettre un auto-test et une transmission des informations numériques par ouverture de boucle.

4. Agencement, selon la revendication 2, dans lequel l'unité de commande d'un actionneur comporte au moins un processeur (25) et une mémoire à double accès (27) à laquelle sont séparément reliés le processeur et une interface de transmission (28) donnant accès au niveau supérieur du système de commande pour permettre à cette unité de commande de fonctionner indépendamment du système de commande, en cas de nécessité.
